# FASCICULE DE BREVET EUROPEEN

(11) **EP 0 773 857 B1**
(45) Date de publication et mention de la délivrance du brevet: **15.12.1999**
(21) Numéro de dépôt: 95928477.9
(22) Date de dépôt: 26.07.1995
(51) Int. Cl.: B27N 3/06, B32B 27/04

(54) **PROCEDE DE FABRICATION D'UN REVETEMENT DE SOL A PAREMENT BOIS NATUREL OU SYNTHETIQUE, ET PRODUITS OBTENUS**
VERFAHREN ZUR HERSTELLUNG EINES BODENBELAGES MIT EINEM HOLZ- ODER HOLZÄHNLICHEM ZIERSCHICHT UND DIE SO HERGESTELLTEN PRODUKTE
METHOD FOR THE MANUFACTURE OF A NATURAL OR SYNTHETIC WOOD FLOOR COVERING AND ARTICLES SO OBTAINED

(30) Priorité: 01.08.1994 EP 94870133
(43) Date de publication de la demande: 21.05.1997
(73) Titulaire: Tarkett Sommer S.A., 92748 Nanterre Cedex (FR)
(72) Inventeur: ROUSSEL, Albert, L-9514 Wiltz (LU)
(74) Mandataire: Van Malderen, Joelle
(86) Numéro de dépôt international: EP9502976
(87) Numéro de publication internationale: WO9604114

(56) Documents cités:
- EP-A- 0 329 154
- WO-A-90/13403
- CH-A- 461 792
- DE-A- 1 904 362
- DE-A- 2 060 767
- US-A- 2 831 794

## Description

### Objet de l'invention.

La présente invention se rapporte à un procédé de fabrication d'un revêtement de sol qui comporte un parement de bois naturel ou synthétique.

La présente invention se rapporte également aux revêtements de sol obtenus par le procédé, comprenant soit un parement de bois naturel, soit un parement synthétique.

### Arrière-plan technologique.

Récemment, de nombreux revêtements de sol imitant les parquets ou les planchers sont apparus sur le marché. Ils se présentent sous la forme d'une âme réalisée à partir de panneaux de particules et/ou de fibres agglomérées et possèdent d'une part sur la face supérieure le parement décoratif qui peut être constitué soit d'une feuille de placage en bois, soit d'une feuille de papier mélaminé imprimée ou encore d'un revêtement synthétique, et d'autre part sur l'envers un contreparement d'équilibrage.

Afin d'augmenter encore la résistance, en particulier à l'usure, on dispose souvent une couche supplémentaire sur le parement décoratif, soit par le dépôt d'un vernis polyuréthane ou éventuellement par le dépôt d'une feuille translucide mélamine.

La technique de fabrication est réalisée comme suit: tout d'abord, on effectue la construction d'un complexe destiné à réaliser le panneau support ou âme, de préférence à l'aide d'un mélange de particules et/ou de fibres de bois avec de la colle. Cette colle peut être par exemple constituée par des résines phénoliques ou par des aminoplastes (mélamine, uré-formaldéhyde). Ce complexe est ensuite soumis à des températures et à des pressions adéquates, de manière à obtenir une réticulation de la colle.

Ensuite, le procédé consiste à encoller les deux faces du panneau support afin d'y faire adhérer deux feuilles de parement, d'une part sur l'endroit et d'autre part sur l'envers. Eventuellement, le complexe obtenu subit encore une étape de vernissage ou de finition (découpe en lames, usinage, ...)

De préférence, le revêtement ainsi obtenu se présente sous la forme de lamelles minces qui, assemblées, peuvent donner l'impression d'un plancher ou d'un parquet. Dans ce but, les bords sont usinés de part et d'autre respectivement sous la forme d'une rainure et d'une languette afin d'en faciliter la pose.

Néanmoins, les revêtements obtenus par ce procédé présentent plusieurs inconvénients, dont les principaux sont une résistance à l'usure insuffisante, une mauvaise résistance au poinçonnement et une sensibilité importante à l'humidité.

Des améliorations au procédé général ont été décrites notamment dans les documents EP-A-0329154 et EP-A-0355829 en vue d'améliorer plus particulièrement la résistance à l'abrasion. Le procédé décrit dans ces documents consiste essentiellement à incorporer des particules dures dans la couche d'usure.

Le document FR-A-2658750 décrit un procédé de fabrication de revêtements de sol comprenant des feuilles de placage en bois. Afin d'augmenter la résistance à l'usure, on réalise un durcissement desdites feuilles de placage en bois par l'imprégnation sous vide, ce durcissement étant réalisé sous presse à l'aide de résines d'imprégnation.

Le document CH-A-472964 décrit un procédé de fabrication de panneaux de particules comprenant un décor essentiellement constitué de feuilles en matière plastique ou de feuilles de papier qui sont imprégnées de résine et solidarisées sur une couche intermédiaire constituée par un matelas fibreux plus facile à presser que le panneau support de particules. Ce procédé de fabrication permet d'améliorer l'aspect de surface et de réduire la consommation de matière.

Les différents procédés décrits sont essentiellement des procédés qui nécessitent la succession de différentes étapes, ce qui occasionne des pertes de temps et nécessite des espaces de production relativement importants.

D'autre part, diverses techniques ont été proposées pour réaliser dans panneaux décoratifs destinés à des meubles, et qui peuvent entrer dans la catégorie des panneaux de type "Formica". En aucun cas, ces panneaux ne pourraient être destinés à des revêtements de sols. En particulier, la résistance à l'usure est insuffisante. En outre, ces panneaux ont en général un mauvais comportement à l'humidité. Parmi ces techniques, on peut citer les procédés suivants.

Le document US-A-2,831,794 décrit un procédé de production de panneaux possédant un plaquage et dont l'âme est constituée à partir de fines particules de bois. Le procédé consiste essentiellement à disposer un premier plaquage sur lequel on dépose une colle sous forme poudreuse, à réaliser ensuite l'âme du panneau en mélangeant les particules de bois à un liant se présentant sous forme liquide et à maintenir le tout sous une presse travaillant à des pressions relativement faibles (de l'ordre de 7 kg/cm²) sous une température comprise entre 150 et 175 °C.

Il convient de noter que bien qu'une migration de la colle sèche vers l'âme soit décrite dans ce document, on n'observe pas de migration de la colle se présentant à l'interface plaquage / âme vers le plaquage.

Le document DE-A-1904362 décrit un procédé de réalisation de panneaux décoratifs où, en une seule étape, on réalise par pressage et chauffage ledit panneau décoratif. Le procédé consiste à imprégner d'une résine mélaminée la feuille de décor, à disposer ensuite le matelas humide sur cette feuille, et à les soumettre à des pressions n'excédant pas 50 kg/cm² pour des températures de l'ordre de 160 °C.

Le document CH-A-461792 décrit un procédé de fabrication d'un panneau composite à partir d'une âme constituée à partir de fibres ou de particules végétales agglomérées, obtenue par pulvérisation de résine d'urée ou de mélamine en solution aqueuse. Selon ce procédé, on dispose ensuite sur cette âme, de part et d'autre, une ou plusieurs feuilles de papiers décoratifs, ces papiers étant également imprégnés de résine d'urée ou de mélamine. Ensuite, on place l'ensemble sous une presse travaillant à des pressions entre 12 et 80 kg/cm² pour une température de maximum 150 °C. Ce procédé permet de réaliser un panneau en une seule étape.

Le document DE-A-2060767 décrit un procédé de fabrication de pièces à partir d'une âme constituée essentiellement à partir de matières organiques comme, entre autres, de la farine de bois mouillée par un liant liquide tel que des aminoplastes ou homologues, et sur laquelle on dispose un revêtement qui peut être du papier ou tout autre équivalent, le tout étant soumis en une seule étape à une compression à chaud. Les pressions mentionnées dans ce document sont comprises entre 20 et 30 kg/cm², et peuvent parfois atteindre 50 kg/cm².

Le document WO-A-9013403 décrit un procédé de fabrication de pièces moulées à partir de fibres contenant de la cellulose telles que des fibres de bois et un liant qui est une résine de condensation, c'est-à-dire thermodurcissable, sous forme liquide. Ensuite, on dispose un liant visqueux à la surface de l'âme en vue d'effectuer l'encollage des papiers. Le document mentionne les conditions d'opération de la presse suivantes 70 bars à 140 °C pendant 20 minutes.

En conclusion, tous ces documents décrivent des procédés de réalisation de panneaux dont l'âme est obtenue à partir d'un mélange constitué de matières végétales avec un liant liquide et sur laquelle on dispose des feuilles de décor éventuellement contrecollées. On soumet le tout à un pressage, de préférence en une étape, avec des pressions toujours inférieures à 80 kg/cm² et des températures inférieures à 160 °C.

L'humidité résiduelle présente dans les panneaux réalisés à l'aide des divers procédés décrits est probablement éliminée lors du chauffage qui se produit sous une pression relativement réduite.

### Buts de l'invention.

La présente invention vise à proposer un procédé de fabrication de revêtements de sol à parement bois naturel ou synthétique qui présente une résistance à l'usure ainsi qu'une résistance au poinçonnement améliorées.

La présente invention vise également à proposer un procédé de fabrication de revêtements de sol imitant par exemple les parquets, qui présentent un comportement amélioré à l'humidité.

Un but complémentaire de la présente invention est de proposer un procédé de fabrication qui permette de limiter les étapes de fabrication des revêtements de sol.

### Principaux éléments caractéristiques de la présente invention.

La présente invention se rapporte à un procédé de fabrication de revêtements de sol à parement bois naturel ou synthétique, caractérisé en ce qu'on assemble en une seule étape un envers faisant fonction de contreparement d'équilibrage, une couche intermédiaire destinée à constituer l'âme du revêtement et qui est essentiellement composée d'un mélange de fines particules organiques et d'une colle en poudre essentiellement non réticulée, un parement décoratif et éventuellement une feuille destinée à constituer la couche d'usure, le tout étant maintenu sous une presse à haute température et à haute pression en vue de provoquer la réticulation de la colle.

De préférence, la température à laquelle on travaille pour l'assemblage est comprise entre 120 et 200 °C selon la nature de la colle utilisée, tandis que la pression est comprise entre 30 et 150 kg/cm², et plus particulièrement entre 85 et 150 kg/cm². Ces conditions sont susceptibles de changer en fonction des temps de cycle à adapter à l'ensemble de la production.

Lors de l'étape d'assemblage, sous l'influence de la pression et de la chaleur, la colle migre vers la surface de la couche intermédiaire et permet, d'une part, de solidifier l'âme, et d'autre part, sous l'effet de sa migration vers la surface, d'obtenir l'adhérence des feuilles constituant le parement et le contreparement.

Selon une première forme d'exécution de la présente invention de la présente invention, la couche intermédiaire destinée à constituer l'âme est simplement constituée par un mélange sec de fines particules organiques et de colle en poudre non réticulée, ce mélange étant légèrement tassé au moyen d'un rouleau afin que l'on puisse y déposer successivement le parement décoratif et éventuellement la feuille destinée à former la couche d'usure.

Néanmoins, on observe que lors de la fermeture de la presse, l'air contenu dans le mélange fines particules organiques - colle s'échappe, entraînant des particules ou poussières risquant ainsi de polluer le décor. D'autre part, la mise sous pression et la densification que cette mise sous pression entraîne, provoquent des tensions dans le mélange farine - colle qui finalement, se traduisent par des déformations importantes sur le produit fini.

Dans le but d'améliorer les qualités du produit fini et selon une autre forme d'exécution préférée de la présente invention, on peut envisager que la couche intermédiaire soit constituée sous la forme d'un "gâteau" obtenu lors d'une étape préalable à l'étape d'assemblage, en moulant le mélange de fines particules organiques et de colle en poudre essentiellement non réticulée à basse température et sous pression. Ceci permet, tout en travaillant à basse température, de faire fondre la colle mais en l'empêchant de réticuler.

De préférence, les températures utilisées pour cette étape préalable de fabrication du "gâteau" sont comprises entre 50 et 100 °C, tandis que la pression est comprise entre 30 et 100 kg/cm².

Cette façon de procéder permet également, de manière avantageuse, d'obtenir un dégazage pratiquement complet à ce stade-ci en évitant que lors de la mise sous pression, lors de l'étape d'assemblage, des tensions n'apparaissent, ce qui pourrait être la cause de déformations du produit fini.

De manière générale, il est bien entendu possible d'adapter la composition de l'âme à l'usage que l'on en fera, et en particulier en fonction des propriétés désirées (densité, dureté, résistance à l'eau plus ou moins élevées). En particulier, les fines particules organiques sont constituées par de la farine de bois et/ou des fibres telles que des fibres de cellulose et auxquelles on ajoute éventuellement d'autres particules synthétiques plus dures.

La colle en poudre utilisée dans le procédé selon la présente invention est de préférence une colle du type phénoplaste ou aminoplaste ou encore polyuréthane.

Selon la présente invention, on observe qu'il n'est pas nécessaire d'utiliser de colle supplémentaire pour lier entre elles les différentes strates.

Il est également possible, selon une autre forme d'exécution de la présente invention, de stratifier l'âme afin d'économiser sur les quantités de colle utilisée et intervenant dans le procédé.

De manière générale, on observe que l'on a avantageusement obtenu une diminution du nombre d'étapes de fabrication par rapport à un procédé plus classique de réalisation de revêtements de sols.

### Brève description des figures.

- La figure 1: décrit un cliché pris au microscope électronique d'une vue en coupe de l'interface âme - parement décoratif pour un revêtement de sol obtenu par le procédé selon l'invention dans le cas d'un parement en bois.
- Les figures 2, 3 et 4: sont des clichés également pris au microscope électronique représentant l'évolution du parement en bois en fonction du traitement.

### Description d'exemples d'exécution de la présente invention.

### Exemple 1 : parement synthétique.

Dans un mélangeur à tonneaux, on prépare un mélange homogène 90/10 de farine de bois et de colle phénolique en poudre (par exemple PERACIT 823614) essentiellement non réticulée.

Préalablement à cette étape, il est souhaitable d'effectuer un séchage complémentaire de la colle en poudre.

Le mélange farine de bois / colle est ensuite réparti uniformément dans un moule plat constitué par une plaque métallique et un cadre amovible. La quantité de mélange utilisée est calculée en fonction de l'épaisseur et de la densité du produit à réaliser.

Le moule est introduit sous presse et positionne sous le poinçon. Le mélange est dégazé et densifié à 80°C, pendant 2 minutes sous une pression de 80 kg/cm² (par exemple). Le moule est sorti de presse. Après démoulage, on obtient un panneau de bois aggloméré manipulable appelé "gâteau".

Sur une tôle de transport, on empile les différentes strates constituant le produit :
- le contreparement d'équilibrage en papier,
- le panneau pré-aggloméré ou gâteau,
- le paiement décoratif en papier mélaminé imprimé,
- la couche d'usure en papier mélaminé transparent imprégné.

Le complexe est recouvert d'une plaque dont la face en contact avec la couche d'usure est structurée suivant une imitation de grain bois.

L'ensemble est introduit sous presse et aggloméré sur butées à 160 °C, pendant 8 minutes, sous une pression de 125 kg/cm² (par exemple).

Sorti de presse, le complexe est refroidi rapidement entre deux plateaux sous faible pression.

Les tôles sont retirées et réintroduites dans le circuit. Le panneau obtenu est découpé en lames qui sont usinées rainure-languette pour faciliter la pose.

### Exemple 2 : parement bois.

On prépare le panneau aggloméré comme dans l'exemple 1, mais en se servant d'un mélange 80/20 farine de bois - colle en poudre.

Sur une tôle de transport, on dépose successivement:
- le contreparement en bois (feuille de placage),
- le panneau pré-aggloméré ou gâteau,
- le parement décoratif (feuille de placage),
- la couche d'usure en papier mélaminé imprégné,
- la plaque structurée de surface (grain sur la couche d'usure).

L'ensemble est transporté sous presse et aggloméré à 160 °C pendant 8 minutes sous une pression de 125 kg/cm². Sorti de presse, l'ensemble est refroidi rapidement entre deux plateaux. Les deux tôles sont retirées et réintroduites dans le circuit. Les bords du panneau obtenus sont usinés sous forme de rainure-languette en vue de faciliter la pose.

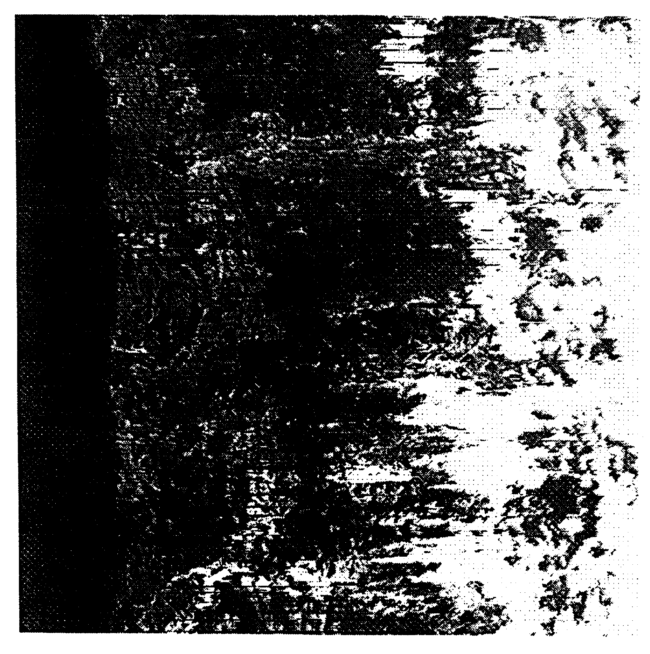

La figure 1 représente plus particulièrement une vue en coupe prise au microscope électronique de l'interface âme - parement décoratif dans le cas où le parement est constitué d'une feuille de placage en bois.

En vue de visualiser l'imprégnation de la feuille de placage bois par la colle, il a été nécessaire de mélanger préalablement à cette colle un stéarate métallique, de préférence le stéarate de zinc, de sorte que l'on observe la présence de zinc, préférentiellement dans les zones les plus poreuses.

De même, à la figure 1, on observe une concentration plus importante du zinc entre la surface mélamine et la feuille de placage.

On peut en déduire que les zones les plus poreuses du placage de bois sont remplies de colle, ce qui permet d'améliorer les propriétés dudit parement.

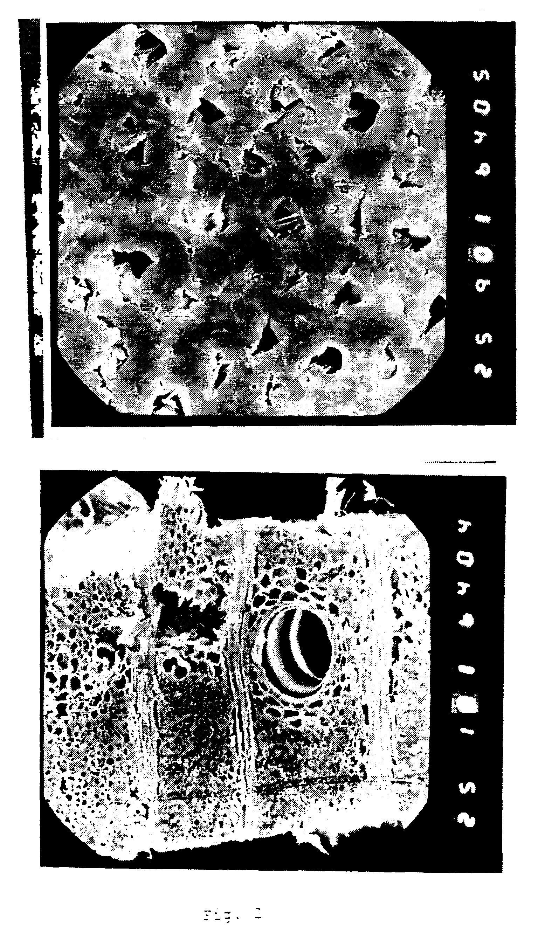

Les figures 2, 3 et 4 représentent l'évolution du placage en fonction du traitement, où :
- la figure 2 représente deux vues (respectivement à 100 et à 900 fois) d'un placage non-traité;

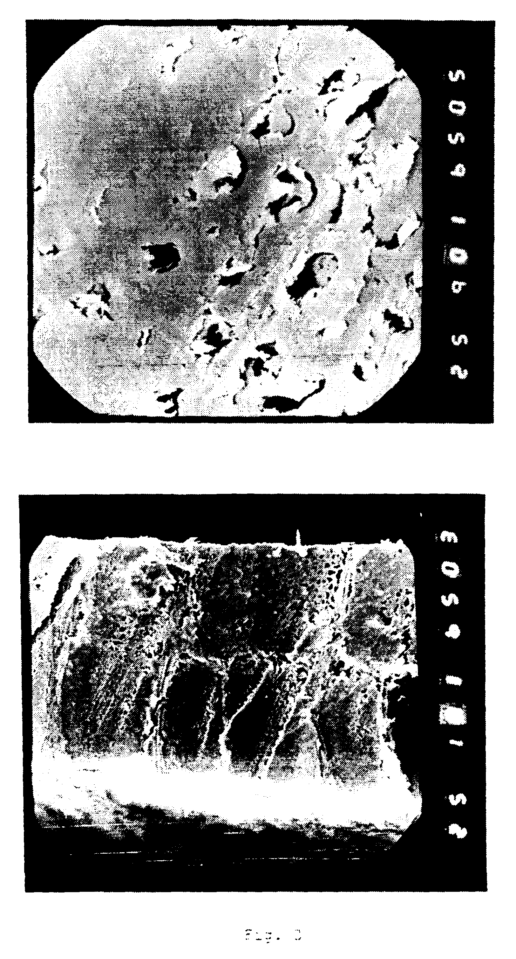

- la figure 3 représente deux vues (respectivement à 100 et 900 fois) d'un placage traité;

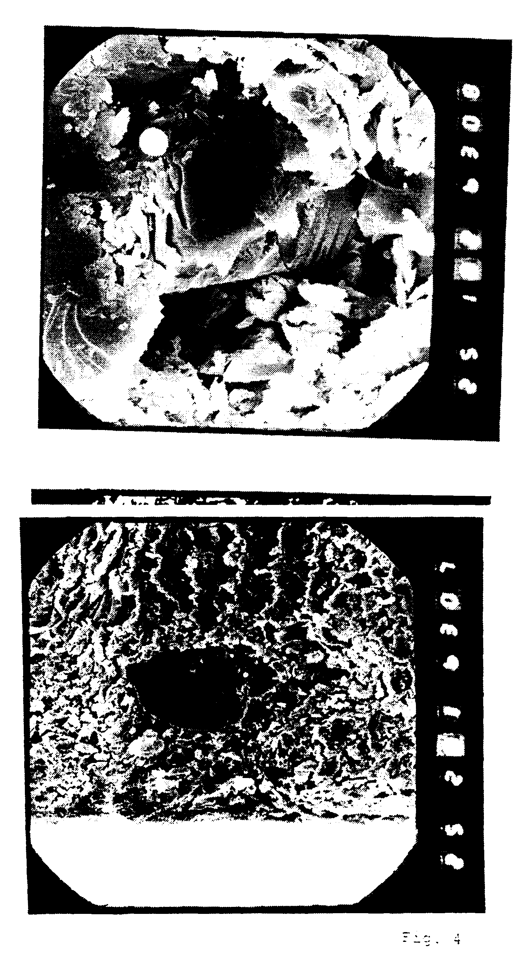

- la figure 4 représente deux vues (respectivement à 200 et 1000 fois) d'un canal rempli de polymères.

D'autre part, on a mis en évidence tant dans le cas du panneau (gâteau) que dans le cas du parement synthétique et du parement bois, les propriétés améliorées de la résistance à l'eau en terme de gonflement (tableau 1) et en terme d'absorption (tableau 2), ainsi que les propriétés améliorées pour la dureté (tableau 3).

Aux tableaux 1 et 2, on observe que la résistance à l'eau en terme de gonflement (en %) et en terme d'absorption (en %) augmente en fonction de la densité et du taux de colle utilisés (en %).

Plus particulièrement, pour le panneau proprement dit, cette augmentation est d'un facteur 30 et d'un facteur 50 respectivement pour le gonflement et pour l'absorption dans le cas d'une immersion de 24 heures.

De même, on observe au tableau 3 une amélioration des propriétés de dureté (MPa) en fonction de la densité et du taux de colle utilisés (en %).

**Tableau 1**

| Résistance à l'eau - Gonflement (en %) | | | | | |
|---|---|---|---|---|---|
| Densité calculée | Taux de colle (%) | | | | |
| | 5 | 10 | 15 | 20 | 25 |
| | | | | | |

| Panneau | | | | | |
|---|---|---|---|---|---|
| 0,8 | 29,49 | 12,1 | 8,9 | 7,49 | 6,08 |
| 0,9 | 32,92 | 11,27 | 6,53 | 4,29 | 3 |
| 1 | 35,06 | 8,68 | 4,67 | 3,15 | 1,74 |
| 1,1 | 37,36 | 6,6 | 4,06 | 2,15 | 2,16 |
| 1,2 | 32,23 | 5,31 | 3,38 | 1,79 | 1,45 |

| Parement synthétique | | | | | |
|---|---|---|---|---|---|
| 0,9 | n.m. | 2,75 | 2,25 | 1,7 | 1,19 |
| 1 | n.m. | 2,08 | 1,8 | 1,14 | 1,14 |
| 1,1 | n.m. | 0,63 | 0,31 | 0,58 | 1,17 |
| 1,2 | n.m. | 1,18 | 1,57 | 0,61 | 1,07 |

| Panneau bois déroulé | | | | | |
|---|---|---|---|---|---|
| 0,9 | n.m. | 5,07 | 4,2 | 4,56 | 3,66 |
| 1 | n.m. | 3,98 | 4,01 | 4,64 | 3,9 |
| 1,1 | n.m. | 3,61 | 4,6 | 3,61 | 3,63 |
| 1,2 | n.m. | 4,28 | 3,5 | 4,03 | 3,63 |

| | | | | | |
|---|---|---|---|---|---|
| n.m. : non mesurable; échantillon détruit. | | | | | |

**Tableau 2**

| Résistance à l'eau - Absorption (en %) | | | | | |
|---|---|---|---|---|---|
| Densité calculée | Taux de colle (%) | | | | |
| | 5 | 10 | 15 | 20 | 25 |
| | | | | | |

| Panneau | | | | | |
|---|---|---|---|---|---|
| 0,8 | 90,23 | 28,66 | 22,58 | 17,81 | 16,98 |
| 0,9 | 78,95 | 21,28 | 13,12 | 10,06 | 6,57 |
| 1 | 67,76 | 16,41 | 8,74 | 6,13 | 4,63 |
| 1,1 | 60,50 | 10,18 | 6,38 | 3,98 | 3,41 |
| 1,2 | 41,83 | 7,72 | 4,86 | 3,32 | 2,31 |

| Parement synthétique | | | | | |
|---|---|---|---|---|---|
| 0,9 | 76,15 | 9,35 | 6,01 | 5,63 | 4,61 |
| 1 | 66,66 | 7,02 | 4,89 | 4,37 | 3,34 |
| 1,1 | 38,59 | 4,77 | 3,48 | 3,08 | 2,42 |
| 1,2 | 22,06 | 3,49 | 2,62 | 2,34 | 1,72 |

| Panneau bois déroulé | | | | | |
|---|---|---|---|---|---|
| 0,9 | n.m. | 14,74 | 13,70 | 12,80 | 11,50 |
| 1 | n.m. | 11,91 | 10,19 | 9,59 | 9,08 |
| 1,1 | n.m. | 9,77 | 9,13 | 7,68 | 7,03 |
| 1,2 | n.m. | 8,7 | 7,34 | 6,36 | 5,95 |

| | | | | | |
|---|---|---|---|---|---|
| n.m. : non-mesurable; échantillon détruit. | | | | | |

**Tableau 3**

| Absorption - Dureté (MPa) | | | | | |
|---|---|---|---|---|---|
| Densité calculée | Taux de colle (%) | | | | |
| | 5 | 10 | 15 | 20 | 25 |
| | | | | | |

| Panneau | | | | | |
|---|---|---|---|---|---|
| 0,8 | 1,33 | 1,59 | 1,64 | 1,79 | 1,81 |
| 0,9 | 1,70 | 1,98 | 2,00 | 2,21 | 2,22 |
| 1 | 2,23 | 2,58 | 2,67 | 2,77 | 2,74 |
| 1,1 | 2,57 | 2,98 | 3,09 | 3,22 | 3,51 |
| 1,2 | 2,76 | 3,17 | 3,46 | 3,56 | 3,89 |

| Parement synthétique | | | | | |
|---|---|---|---|---|---|
| 0,9 | 1,37 | 1,63 | 1,71 | 1,82 | 1,85 |
| 1 | 1,71 | 2,01 | 2,26 | 2,17 | 2,51 |
| 1,1 | 2,10 | 2,46 | 2,42 | 2,69 | 2,87 |
| 1,2 | 2,29 | 2,67 | 2,82 | 3,05 | 3,13 |

| Panneau bois déroulé | | | | | |
|---|---|---|---|---|---|
| 0,9 | n.m. | 2,31 | 2,29 | 2,48 | 2,45 |
| 1 | n.m. | 2,56 | 2,58 | 2,73 | 2,90 |
| 1,1 | n.m. | 2,85 | 2,97 | 2,79 | 3,25 |
| 1,2 | n.m. | 3,03 | 3,11 | 3,20 | 3,41 |

| | | | | | |
|---|---|---|---|---|---|
| N.M. : non-mesurable; échantillon détruit | | | | | |

## Revendications

1. Procédé de fabrication de revêtements de sol à parement bois naturel ou synthétique, caractérisé en ce qu'on assemble en une seule étape un envers faisant fonction de contreparement d'équilibrage, une couche intermédiaire destinée à constituer l'âme du revêtement et qui est essentiellement composée d'un mélange sec de fines particules organiques et d'une colle en poudre essentiellement non réticulée, un parement décoratif et eventuellement une feuille destinée à constituer la couche d'usure, le tout étant maintenu sous une presse à une température comprise entre 120°C et 200°C et à une pression comprise entre 30 et 130 kg/cm² en vue de provoquer la réticulation de la colle.

2. Procédé de fabrication de revêtements de sol selon la revendication 1, caractérisé en ce que l'étape d'assemblage s'effectue à une pression comprise entre 85 et 150 kg/cm².

3. Procedé de fabrication de revêtements de sol selon la revendication 1 ou 2, caractérise en ce que la couche intermédiaire destinée à constituer l'âme est simplement constituée par un mélange sec de fines particules organiques et de colle en poudre non réticulée, ce mélange étant légèrement tassé au moyen d'un rouleau afin que l'on puisse y déposer successivement le parement décoratif et éventuellement la feuille destinée à former la couche d'usure.

4. Procédé de fabrication de revêtements de sol selon la revendication 1 ou 2, caractérisé en ce que la couche intermédiaire est constituée par un gâteau obtenu préalablement à l'étape d'assemblage en moulant le mélange de fines particules organiques et de colle en poudre essentiellement non réticulée à basse température et sous pression.

5. Procédé de fabrication de revêtements de sol selon la revendication 4, caractérisé en ce que l'on travaille pour l'étape de fabrication de précaration du gâteau à une température comprise entre 50 et 100°C et une pression comprise entre 30 et 100 kg/cm².

6. Procédé de fabrication de revêtements de sol selon l'une quelconque des revendications précédentes, caractérisé en ce que les fines particules organiques sont constituées par de la farine de bois et/ou des fibres telles que des fibres de cellulose et auxquelles on ajoute éventuellement d'autres particules synthétiques plus dures.

7. Procédé de fabrication de revêtements de sol selon l'une quelconque des revendications précédentes, caractérisé en ce que la colle en poudre utilisée est une colle du type phénoplaste ou aminoplaste ou encore polyuréthane.

## Claims

1. Process for the manufacture of floor coverings with natural or synthetic wood facing, characterized by assembling in a single stage a reverse side acting as balancing counterfacing, an intermediate layer intended to form the core of the covering and which is essentially made up of a mixture of fine organic particles and of an essentially uncrosslinked powder adhesive, a decorative facing and optionally a sheet intended to form the wear layer, the whole being kept under a press at a temperature of between 120 and 200°C and at a pressure of between 30 and 150 kg/cm² with a view to causing the crosslinking of the adhesive.

2. A process for the manufacture of floor coverings according to Claim 1, characterized in that the stage of assembly is performed at a pressure of between 85 and 150 kg/cm².

3. Process for the manufacture of floor coverings according to Claim 1 or 2, characterized in that the intermediate layer intended to form the core consists simply of a dry mixture of fine organic particles and of uncrosslinked powder adhesive, this mixture being lightly packed by means of a roller in order that it may be possible to deposit thereon successively the decorative facing and optionally the sheet intended to form the wear layer.

4. Process for the manufacture of floor coverings according to Claim 1 or 2, characterized in that the intermediate layer consists of a cake obtained before the assembly stage by molding the mixture of fine organic particles and of essentially uncrosslinked powder adhesive at low temperature and under pressure.

5. Process for the manufacture of floor coverings according to Claim 4, characterized in that work is done for the stage of manufacture of preparation of the cake at a temperature of between 50 and 100°C and a pressure of between 30 and 100 kg/cm².

6. Process for the manufacture of floor coverings according to any one of the preceding claims, characterized in that the fine organic particles consist of wood flour and/or of fibers such as cellulose fibers, to which other, harder synthetic particles are optionally added.

7. Process for the manufacture of floor coverings according to any one of the preceding claims, characterized in that the powder adhesive employed is an adhesive of the phenolic plastic or aminoplastic or else polyurethane type.

## Patentansprüche

1. Verfahren zur Herstellung von Bodenbelägen mit einer Verblendung aus natürlichem Holz oder synthetischem Material, dadurch gekennzeichnet, daß eine Rückseitenschicht, die als Gleichgewichts-Gegenverblendung dient, eine Zwischenschicht, die dazu bestimmt ist, die Seele des Belags zu bilden, und die im wesentlichen aus einem trockenen Gemisch von feinen organischen Partikeln und einem im wesentlichen nicht-vernetzten, pulverförmigen Kleber besteht, eine dekorative Verblendung und eventuell eine Schicht, die dazu bestimmt ist, die Abnutzungsschicht zu bilden, in einem einzigen Schritt zusammengefügt werden, wobei das Ganze bei einer Temperatur zwischen 120?C und 200?C, und einem Druck zwischen 30 und 150 kg/cm² unter einer Presse gehalten wird, um die Vernetzung des Klebers hervorzurufen.

2. Verfahren zur Herstellung von Bodenbelägen gemäß Anspruch 1, dadurch gekennzeichnet, daß der Zusammenfügungsschritt bei einem Druck zwischen 85 und 150 kg/cm² ausgeführt wird.

3. Verfahren zur Herstellung von Bodenbelägen gemäß Anspruch 1 oder 2, dadurch gekennzeichnet, daß die Zwischenschicht, die dazu bestimmt ist, die Seele zu bilden, einfach aus einem trockenen Gemisch von feinen organischen Partikeln und nicht-vernetztem, pulverförmigem Kleber besteht, wobei dieses Gemisch mittels einer Rolle leicht zusammengepreßt wird, damit darauf nacheinander die dekorative Verblendung und eventuell die Schicht, die dazu bestimmt ist, die Abnutzungsschicht zu bilden, gelegt werden können.

4. Verfahren zur Herstellung von Bodenbelägen gemäß Anspruch 1 oder 2, dadurch gekennzeichnet, daß die Zwischenschicht aus einem Kuchen besteht, der vor dem Zusammenfügungsschritt durch Preßformen des Gemischs von feinen organischen Partikeln und im wesentlichen nicht-vernetztem, pulverförmigem Kleber bei niedriger Temperatur und unter Druck erhalten wurde.

5. Verfahren zur Herstellung von Bodenbelägen gemäß Anspruch 4, dadurch gekennzeichnet, daß bei dem Schritt zur Herstellung des Kuchens bei einer Temperatur zwischen 50 und 100?C und einem Druck zwischen 30 und 100 kg/cm² gearbeitet wird.

6. Verfahren zur Herstellung von Bodenbelägen gemäß irgendeinem der vorhergehenden Ansprüche, dadurch gekennzeichnet, daß die feinen organischen partikel aus Holzmehl und/oder Fasern, wie Zellulosefasern, bestehen, wobei eventuell weitere, härtere, synthetische Partikel zugegeben werden.

7. Verfahren zur Herstellung von Bodenbelägen gemäß irgendeinem der vorhergehenden Ansprüche, dadurch gekennzeichnet, daß der verwendete pulverförmige Kleber ein Kleber vom Phenoplast- oder Aminoplast- oder auch Polyurethantyp ist.
